# EUROPEAN PATENT SPECIFICATION

(11) **EP 0 421 536 B1**
(45) Date of publication and mention of the grant of the patent: **10.05.1995**
(21) Application number: 90202594.9
(22) Date of filing: 01.10.1990
(51) Int. Cl.: C08L 69/00, C08K 5/10

(54) **Aromatic polycarbonate resin containing a mould-release agent**
Formtrennmittel enthaltende aromatische Polycarbonatharze
Résine de polycarbonate contenant un agent de démoulage

(30) Priority: 04.10.1989 NL 8902460
(43) Date of publication of application: 10.04.1991
(73) Proprietor: DSM N.V., 6411 TE Heerlen (NL)
(72) Inventor: Van Doorn, Markus Albertus Martha Maria, NL-6191 CP Beek (lb) (NL)

(56) References cited:
- EP-A- 0 226 189
- FR-A- 2 356 698
- US-A- 4 097 435
- US-A- 4 873 271
- DERWENT WPI, accession no. 72-73734T [46], Derwent Publications Ltd, London, GB & JP-A-72 041 092 (MITSUBISHI GAS KAGAKU K.K.)

## Description

### FIELD OF THE INVENTION

The present invention relates to a composition containing an aromatic polycarbonate resin and a mold-release agent.

### Background of the Invention

Compositions comprising an aromatic polycarbonate resin and a mold-release agent are described, inter alia, in NL-A-7704918. This patent application describes the preparation of thermoplastic molding compounds of high molecular weight thermoplastic aromatic polycarbonates which contain a mold-release agent. The polycarbonates are made from aromatic dihydroxy compounds. The composition contains 0.01-5% (wt) of an ester of an aliphatic carboxylic acid made up of 10-20 carbon atoms and an aromatic hydroxy compound with 1-6 hydroxy groups.

For many years valuable articles have been produced in molds from aromatic polycarbonate resins. Injection molding is a suitable process for the production of articles from aromatic polycarbonate resins, particularly articles of a complex nature. In order to facilitate the removal of articles from the injection mold in an economic manner, a mold-release agent is added to the aromatic polycarbonate resin. Mold-release agents enable articles made of aromatic polycarbonate resin to be released from a mold using under a lower ejection pressure. This reduces the damage caused to the article.

It was surprisingly found that the mold-release agents of the present invention resulted in a lower ejection pressure than the mold-release agents known so far.

### SUMMARY OF THE PRESENT INVENTION

The present invention is a composition which comprises a aromatic polycarbonate polymer and a mold-release agent. The mold-release agent used in the present invention is selected from the group consisting of ethylene glycol distearate, the diester of 1,6 hexanediol and stearic acid, and the diester of ethylene glycol and lauric acid.

### Detailed Description of the Preferred Embodiment

Aromatic polycarbonates suitable for use in the present invention can be prepared in the usual manner by reacting a bivalent phenol with a carbonate initial product using an interfacial polymerization process. Examples of some suitable bivalent phenols are 4,4′-dihydroxybiphenyl,
2,2-bis(4-hydroxyphenyl)propane-(bisphenol A),
2,2-bis(4-hydroxy-3-methylphenyl)propane,
2,2-bis-(3-chlorine-4-hydroxyphenyl)-propane,
2,2-bis-(3,5-dimethyl-4-hydroxyphenyl)-propane,
2,4-bis-(4-hydroxyphenyl)-2-methylbutane,
2,4-bis-(3,5-dimethyl-4-hydroxyphenyl)-2-methylbutane,
4,4-bis(4-hydroxyphenyl)heptane,
bis-(3,5-dimethyl-4-hydroxyphenyl)-methane,
1,1-bis-(4,hydroxyphenyl)-cyclohexane,
1,1-bis-(3,5-dimethyl-4-hydroxyphenyl)-cyclohexane,
2,2-(3,5,3′,5′-tetrabromine-4,4′-dihydroxydiphenyl)propane,
(3,3′-dichlorine-4,4′-dihydroxyphenyl)methane,
bis-(3,5-dimethyl-4-hydroxyphenyl)-sulphone,
bis-4-hydroxyphenylsulphone, bis-4-hydroxyphenylsulphide.

The carbonate initial product may be a carbonyl halide, a halogen formate or a carbonate ester. Examples of suitable carbonyl halides are carbonyl chloride and carbonyl bromide. Examples of suitable halogen formates are bis-halogen formates of bivalent phenols such as hydroquinone or of glycols such as ethylene glycol. Examples of carbonate esters that can be applied are diphenyl carbonate, di(chlorophenyl)carbonate, di(bromophenyl)carbonate, di(alkylphenyl)carbonate, phenyl tolyl carbonate, etc. and mixtures of these. Although other carbonate initial products can be used also, the preferred carbonate initial products are the carbonyl halides. A particularly preferred carbonate initial product is carbonyl chloride, also known as phosgene.

The aromatic polycarbonate resins applied according to the invention can be prepared using a catalyst, an acid acceptor and a compound for regulating the molecular weight. Examples of catalysts are tertiary amines such as triethylamine, tripropylamine, N,N-dimethyl aniline, quaternary ammonium compounds such as tetraethyl ammonium bromide and quaternary phosphonium compounds such as methyl triphenyl phosphonium bromide.

Examples of organic acid acceptors are pyridine, triethylamine, dimethyl aniline, etc. Examples of inorganic acid acceptors are hydroxides, carbonates, bicarbonates and phosphates of an alkali metal or alkaline-earth metal.

Examples of compounds for regulating the molecular weight are monovalent phenols such as phenol, t-butyl-phenol and para- bromophenol and secondary amines.

Included within the scope of the present invention are mixtures of the aromatic polycarbonate resins with other polymers. Polymers suitable for the formation of these mixtures include: copolymers of styrene and/or alpha-methylstyrene with acrylonitrile, methacrylonitrile, methylmethacrylate or maleic anhydride and graft copolymers of styrene and/or alpha- methylstyrene with acrylonitrile or methacrylonitrile on a rubber such as polybutadiene rubber, styrenebutadiene rubber or a more saturated rubber such as EPT.

The mold-release agents according to the present invention are added to the aromatic polycarbonate resin in an amount of approximately 0.01 to 3% by weight relative to the amount of the aromatic polycarbonate resin. A preferred amount of the mold-release agent of the present invention is an amount between 0.05 to 0.5% by weight.

Other additives which are customary in aromatic polycarbonate resins can also be used. These include: thermal stabilizers, for instance organic phosphites; stabilizing agents against hydrolysis; flame retardants; agents which prevent dropping; inert fillers such as glass fibres; impact modifiers such as elastomers; colourants; pigments; etc.

The following examples are provided to illustrate the application of the present invention. The Examples are not meant to limit the invention and further examples would be readily apparent to one skilled in the art.

### EXAMPLES

### Example 1: Preparation of the Aromatic Polycarbonate Resin

In a flask provided with a stirrer and a gas feed tube, 300 parts by weight bisphenol A and 6.2 parts by weight paratertiary butyl phenol were suspended in 1 litre of water. The oxygen was removed from the reaction mixture by passing nitrogen through the mixture while stirring for 20 minutes. Subsequently, 250 parts by weight of a 43%-(wt) sodium hydroxide solution and 650 parts by weight methylene chloride were added. The mixture was brought to a temperature of 25°C and kept at this temperature by cooling. In 90 minutes 160 parts by weight phosgene was introduced. 20 minutes after commencement of the introduction of phosgene, 50 parts by weight sodium hydroxide solution was added once again.

To the resulting solution was added 1 part by weight triethylamine and the mixture was stirred for 20 minutes. Extra methylene chloride was added to reduce the viscosity of the highly viscous solution. The aqueous phase was separated off and the organic phase was washed with water until nothing of the salt was left in the organic phase. The aromatic polycarbonate resin was separated from the solution and dried.

The aromatic polycarbonate resin had a viscosity of 1.29 measured in a 0.5%-(wt) solution in methylene chloride.

### Comparative examples 1 and 2

### Comparative Example 1:

30 grams pentaerythritol tetrastearate, 10 kg of the poly-carbonate resin prepared according to Example 1 and 10 grams of phosphite stabilizer were extruded at 315°C in a twin-screw extruder with a diameter of approximately 30 mm and a speed of 250 rpm and processed to form a granulate.

This granulate was dried for 4 hours at a temperature of 120°C and subsequently injection-moulded. The mold that was used produces cups with a diameter of 55 mm and a length of 65 mm with a minimum release angle. The cups were released from the mold with an ejection ring. The release force was recorded by means of a Kisstler force transducer and Kisstler charge amplifier. The mold temperature of the core was set at 80°C.

The release force was 427.2 N.

### Comparative Example 2:

In the same way as described in Comparative Example 1, a compound was prepared using a tetravalent ester of 1,2,4,5-tetrahydroxy benzene and stearic acid in place of the pentaerythritol tetrasteavate.

The release force was 497 N.

### Example 2

10 kg aromatic polycarbonate resin prepared according to Example 1, 30 grams ethylene glycol distearate and 10 grams stabilizer were compounded and tested in the manner described in Comparative Example 1.

The release force was 315 N.

### Example 3

The process of Example 2 was repeated where the ester used was the diester of 1,6-hexanediol and stearic acid.

The release force was 314.9 N.

### Example 4

The process of Example 2 was repeated where the ester used was the diester of ethylene glycol and lauric acid.

The release force was 275.9 N.

## Claims

1. A composition which comprises an aromatic polycarbonate resin and a mold-release agent, wherein the mold-release agent is selected from the group consisting of ethylene glycol distearate, the diester of 1,6-hexanediol and stearic acid, and the diester of ethylene glycol and lauric acid.

2. A Composition according to claim 1, wherein the mold-release agent is used in an amount of 0.01 to 3% by weight relative to the amount of the aromatic polycarbonate resin.

3. Composition according to claim 2, characterized in that the mold-release agent is used in an amount of 0.05 to 0.5% by weight.

4. A composition according to claim 1, wherein said composition contains an additive in addition to the aromatic polycarbonate resin and the mold-release agent.

5. A composition according to claim 4, wherein said additive is selected from thermal stabilizers, hydrolysis stabilizers, flame retardents, impact modifiers, pigments and inert fillers.

6. An article produced by the process of injection molding a composition comprising an aromatic polycarbonate and a mold release agent, wherein said mold release agent is selected from the group consisting of ethylene glycol distearate, the diester of 1,6-hexanediol and stearic acid, and the diester of ethylene glycol and lauric acid.

## Patentansprüche

1. Zusammensetzung, welche ein aromatisches Polycarbonat-Harz und ein Formtrennmittel umfaßt, wobei das Formtrennmittel ausgewählt ist aus der Gruppe bestehend aus Ethylenglykoldistearat, dem Diester von 1,6-Hexandiol und Stearinsäure, und dem Diester von Ethylenglykol und Laurinsäure.

2. Zusammensetzung nach Anspruch 1, worin das Formtrennmittel in einer Menge von 0,01 bis 3 Masse-% relativ zur Menge des aromatischen Polycarbonat-Harzes verwendet wird.

3. Zusammensetzung nach Anspruch 2, dadurch gekennzeichnet, daß das Formtrennmittel in einer Menge von 0,05 bis 0,5 Masse-% verwendet wird.

4. Zusammensetzung nach Anspruch 1, wobei die genannte Zusammensetzung zusätzlich zum aromatischen Polycarbonat-Harz und dem Formtrennmittel ein Additiv enthält.

5. Zusammensetzung nach Anspruch 4, worin das genannte Additiv ausgewählt ist aus Wärmestabilisatoren, Hydrolysestabilisatoren, Flammhemmern, Schlagmodifikatoren, Pigmenten und inerten Füllstoffen.

6. Artikel, welcher durch das verfahren des Spritzgießens einer Zusammensetzung, die ein aromatisches Polycarbonat und ein Formtrennmittel umfaßt, hergestellt wird, wobei das Formtrennmittel ausgewählt ist aus der Gruppe bestehend aus Ethylenglykoldistearat, dem Diester von 1,6-Hexandiol und Stearinsäure, und dem Diester von Ethylenglykol und Laurinsäure.

## Revendications

1. Composition qui comprend une résine de polycarbonate aromatique et un agent de démoulage dans laquelle l'agent de démoulage est choisi dans le groupe comprenant le distéarate d'éthylène-glycol, le diester de 1,6-hexanediol et d'acide stéarique et le diester d'éthylène-glycol et d'acide laurique.

2. Composition selon la revendication 1 dans laquelle on utilise l'agent de démoulage en une quantité de 0,01 à 3% en poids par rapport à la quantité de la résine de polycarbonate aromatique.

3. Composition selon la revendication 2, caractérisée en ce qu'on utilise l'agent de démoulage en une quantité de 0,05 à 0,5% en poids.

4. Composition selon la revendication 1, qui contient un additif en plus de la résine de polycarbonate aromatique et de l'agent de démoulage.

5. Composition selon la revendication 4, dans laquelle ledit additif est choisi parmi les stabilisants thermiques les stabilisants d'hydrolyse, les retardateurs d'inflammation, les modificateurs de chocs, les pigments et les charges inertes.

6. Article préparé par le procédé de moulage par injection d'une composition comprenant un polycarbonate aromatique et un agent de démoulage, dans laquelle ledit agent de démoulage est choisi parmi le distéarate d'éthylène-glycol, le diester de 1,6-hexanediol et d'acide stéarique et le diester d'éthylène-glycol et d'acide laurique.
